# EUROPEAN PATENT APPLICATION

(11) **EP 4 604 479 A1**
(43) Date of publication of application: **20.08.2025**
(21) Application number: 23876583.8
(22) Date of filing: 07.10.2023
(51) Int. Cl.: H04L 41/14

(54) **MODEL SUPERVISION PROCESSING METHOD AND APPARATUS, NETWORK SIDE DEVICE AND READABLE STORAGE MEDIUM**

(30) Priority: 10.10.2022 CN 202211236921
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN); CHONG, Weiwei, Dongguan, Guangdong 523863 (CN)
(74) Representative: Lavoix
(86) International application number: PCT/CN2023/123174
(87) International publication number: WO 2024/078380

(57) **Abstract**

This application discloses a model supervision processing method and apparatus, a network-side device, and a readable storage medium, pertaining to the field of communication technologies. The model supervision processing method of embodiments of this application includes: receiving, by a first network device, first information from a second network device, where the first information includes a data analysis result; and sending, by the first network device, second information to the second network device or a third network device, where the second information is used to indicate a usage status of the data analysis result by the first network device.

## Description

### CROSS-REFERENCE TO RELATED APPLICATIONS

This application claims priority to Chinese Patent Application No. 202211236921.9, filed in China on October 10, 2022, which is incorporated herein by reference in its entirety.

### TECHNICAL FIELD

This application pertains to the field of communications technologies, and specifically relates to a model supervision processing method and apparatus, a network-side device, and a readable storage medium.

### BACKGROUND

As communication technology develops, artificial intelligence models have been introduced into communication systems. Currently, a network data analytics function (Network Data Analytics Function, NWDAF) typically needs to use a model for task analysis to obtain an analysis result and collect data from a network for comparison with a predicted result in order to complete a task requested by a consumer network function, so as to determine model performance information. Because the consumer network function may perform, based on the analysis result, a network operation different from those in general scenarios (where network operations are not determined based on analysis results), data used for evaluating model performance information may be affected, resulting in relatively poor accuracy in evaluation of model performance information.

### SUMMARY

Embodiments of this application provide a model supervision processing method and apparatus, a network-side device, and a readable storage medium, which can resolve the problem of poor accuracy in evaluation of model performance information.

According to a first aspect, a model supervision processing method is provided, including:
receiving, by a first network device, first information from a second network device, where the first information includes a data analysis result; and
sending, by the first network device, second information to the second network device or a third network device, where the second information is used to indicate a usage status of the data analysis result by the first network device.

According to a second aspect, a model supervision processing method is provided, including:
sending, by a second network device, first information to a first network device, where the first information includes a data analysis result; and
receiving, by the second network device, second information from the first network device, where the second information is used to indicate a usage status of the data analysis result by the first network device.

According to a third aspect, a model supervision processing method is provided, including:
receiving, by a third network device, second information from a first network device or a second network device, where the second information is used to indicate a status of using a data analysis result by the first network device; and
evaluating, by the third network device, first performance information of a first model based on the second information, where the first model is a model obtained by the third network device through a model training process, and the first model is used for generating the data analysis result by the second network device.

According to a fourth aspect, a model supervision processing apparatus is provided, including:
a first receiving module, configured to receive first information from a second network device, where the first information includes a data analysis result; and
a first sending module, configured to send second information to the second network device or a third network device, where the second information is used to indicate a usage status of the data analysis result by the first network device.

According to a fifth aspect, a model supervision processing apparatus is provided, including:
a second sending module, configured to send first information to a first network device, where the first information includes a data analysis result; and
a second receiving module, configured to receive second information from the first network device, where the second information is used to indicate a usage status of the data analysis result by the first network device.

According to a sixth aspect, a model supervision processing apparatus is provided, including:
a third receiving module, configured to receive second information from a first network device or a second network device, where the second information is used to indicate a status of using a data analysis result by the first network device; and
a second evaluation module, configured to evaluate first performance information of a first model based on the second information, where the first model is a model obtained by the third network device through a model training process, and the first model is used for generating the data analysis result by the second network device.

According to a seventh aspect, a network-side device is provided, where the network-side device includes a processor and a memory, where a program or instructions capable of running on the processor are stored in the memory; and when the program or instructions are executed by the processor, the steps of the method according to the first aspect are implemented, or the steps of the method according to the second aspect are implemented, or the steps of the method according to the third aspect are implemented.

According to an eighth aspect, a network-side device is provided, including a processor and a communication interface, where
in a case that the network-side device is a first network device, the communication interface is configured to receive first information from a second network device, where the first information includes a data analysis result; and send second information to the second network device or a third network device, where the second information is used to indicate a usage status of the data analysis result by the first network device;
in a case that the network-side device is a second network device, the communication interface is configured to send first information to a first network device, where the first information includes a data analysis result; and receive second information from the first network device, where the second information is used to indicate a usage status of the data analysis result by the first network device; and
in a case that the network-side device is a third network device, the communication interface is configured to receive second information from a first network device or a second network device, where the second information is used to indicate a status of using a data analysis result by the first network device; and the processor is configured to evaluate first performance information of a first model based on the second information, where the first model is a model obtained by the third network device through a model training process, and the first model is used for generating the data analysis result by the second network device.

According to a ninth aspect, a communication system is provided, including a first network device, a second network device, and a third network device, where the first network device may be configured to perform the steps of the model supervision processing method according to the first aspect, the second network device may be configured to perform the steps of the model supervision processing method according to the second aspect, and the third network device may be configured to perform the steps of the model supervision processing method according to the third aspect.

According to a tenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the steps of the method according to the first aspect, or the steps of the method according to the second aspect, or the steps of the method according to the third aspect.

According to a twelfth aspect, a computer program/program product is provided, where the computer program/program product is stored in a storage medium, and the computer program/program product is executed by at least one processor to implement the steps of the method according to the first aspect, or the steps of the method according to the second aspect, or the steps of the method according to the third aspect.

In the embodiments of this application, the first network device sends the second information to the second network device or the third network device, so that the second network device or the third network device can determine, based on the second information, the usage status of the data analysis result by the first network device, so as to assist in evaluating the first performance information of the first model, thereby improving accuracy and reliability of evaluating the model performance information.

### BRIEF DESCRIPTION OF DRAWINGS

FIG. 1 is a schematic structural diagram of a network to which embodiments of this application are applicable;
FIG. 2 is a first flowchart of a model supervision processing method according to an embodiment of this application;
FIG. 3 is a second flowchart of a model supervision processing method according to an embodiment of this application;
FIG. 4 is a third flowchart of a model supervision processing method according to an embodiment of this application;
FIG. 5 is a fourth flowchart of a model supervision processing method according to an embodiment of this application;
FIG. 6 is a fifth flowchart of a model supervision processing method according to an embodiment of this application;
FIG. 7 is a sixth flowchart of a model supervision processing method according to an embodiment of this application;
FIG. 8 is a first structural diagram of a model supervision processing apparatus according to an embodiment of this application;
FIG. 9 is a second structural diagram of a model supervision processing apparatus according to an embodiment of this application;
FIG. 10 is a third structural diagram of a model supervision processing apparatus according to an embodiment of this application;
FIG. 11 is a structural diagram of a communication device according to an embodiment of this application; and
FIG. 12 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application may be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

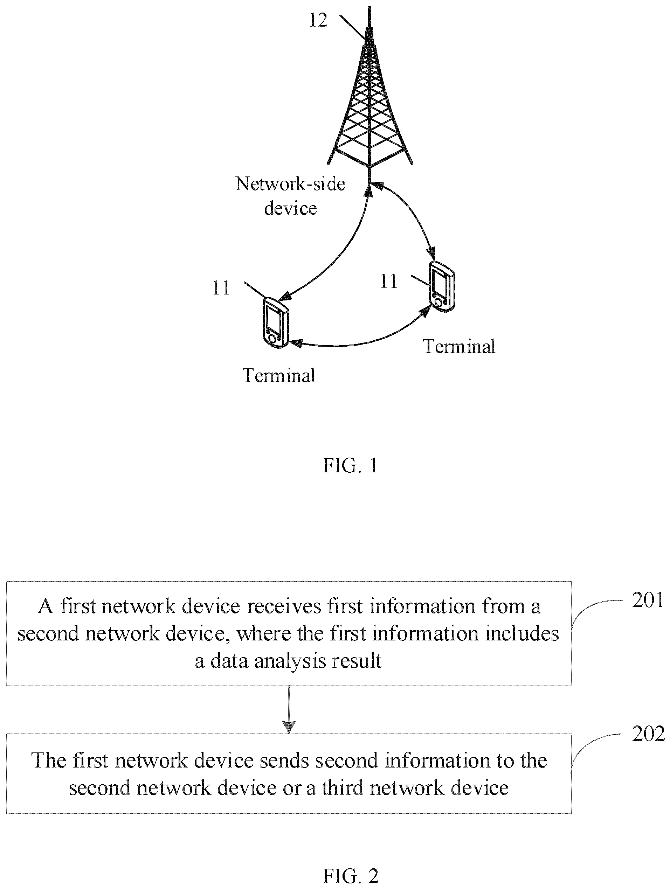

FIG. 1 is a block diagram of a wireless communications system to which the embodiments of this application are applicable. The wireless communications system includes a terminal 11 and a network device 12. The terminal 11 may be a terminal device such as a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Referring to FIG. 2, an embodiment of this application provides a model supervision processing method. As shown in FIG. 2, the model supervision processing method includes the following steps.

Step 201: A first network device receives first information from a second network device, where the first information includes a data analysis result.

Step 202: The first network device sends second information to the second network device or a third network device, where the second information is used to indicate a usage status of the data analysis result by the first network device.

In this embodiment of this application, first, the first network device may send a task request for a first task to the second network device, and the task request is used for requesting to obtain a data analysis result of the first task. The first task may be one data analysis task, and data analysis task information of a data analysis task includes task identification information, conditional limitation information of a task and analysis object information of the task. The task identification information may be an analytic ID (analytic ID), and the analytic ID may be used to describe what purpose the data analysis task is to achieve, what data is to obtained, and so on. For example, if the analytic ID is associated with mobility trajectory information of a user, it may be known that the data analysis result may be location information of the user. The conditional limitation information of the task and the analysis object information of the task are used to further break down task requirements. The second network device may send a model request to the third network device based on the task request, so as to request to obtain a first model for the first task. In the process of the model request, the model request may include task request information and model limiting information, where the task request information includes request content of the task request for the first task, and the model limiting information further clarifies required task requirements, such as limiting an accuracy status of the model. After receiving the model request, the third network device may select or train the first model that meets requirements of the first task and send it to the second network device. Then the second network device may analyze data of the first task based on the first model, generate a data analysis result of the first task, and send the first information to the first network device. The first information includes the data analysis result, and then the first network device may feed back a status of using the data analysis result to the second network device. In this way, the second network device or the third network device can determine a supervision behavior of the first model based on the second information. For example, in a case that the first network device uses the data analysis result and the first network device using the data analysis result affects the network or data in the network, the first performance information of the first model is not evaluated or related data affecting evaluation of the first performance information is filtered out during evaluation, thus improving accuracy and reliability of evaluating the model performance information.

Optionally, in some embodiments, when sending the first information to the first network device, the second network device may carry identification information and address information of the third network device, so that the first network device can know information about the third network device and directly send information/messages to the third network device. Optionally, before this, the first network device may first request the second network device to send the identification information and address information of the third network device, or the first network device may send its own information to the second network device, and the second network device may send it to the third network device. Optionally, after the first network device makes a request, the second network device may alternatively send the identification information, address information, and the like of the third network device using a separate message.

Alternatively, when or after receiving the model request, the third network device selects or trains a first model meeting the requirements of the first task and sends it to the second network device; or after that, the third network device may request the second network device to feed back the identification information and address information of the first network device, so as to send information/messages to the first network device. Alternatively, the third network device requests the second network device to send information about the third network device to the first network device, so as to inform the first network device to feed back/send the second information to the third network device.

Optionally, evaluating the first performance information of the first model may be understood as supervising the first model. Specifically, the first model may be supervised by the second network device, or the first model may be supervised by the third network device. For example, in some embodiments, in a case that the first model is supervised by the third network device, the second information may alternatively trigger the second network device to forward the second information to the third network device, or the first network device may directly send the second information to the third network device. Supervising the first model may be understood or replaced by supervising the first task.

It should be understood that the first performance information is used to indicate model performance during actual use of the first model, that is, the first performance information may be understood as model performance information that is obtained through evaluation based on collected data after data analysis is performed for the first task using the first model upon completion of model training.

Optionally, the data analysis result may be an output value obtained through calculation and inference by the second network device using the first model, for example, it may be a load prediction for a network-side device. Depending on different tasks, content of the data analysis result may be different. For example, for a load task of the network device, the data analysis result may be a load status of the network device at some time in the future, for example, a user plane function (User Plane Function, UPF) has a high load the next morning.

It should be noted that the first network device may be understood as a consumer network function (consumer NF); the second network device may be understood as an NWDAF or an analytics logical function (Analytics Logical Function, AnLF) in the NWDAF, which is used for performing inference to generate prediction information or generate a summary of historical data; and the third network device may be understood as an NWDAF or a model training logical function (Model Training Logical Function, MTLF) in the NWDAF, which is used to generate models and conduct model training.

In this embodiment of this application, the first network device sends the second information to the second network device or the third network device, so that the second network device or the third network device can determine, based on the second information, the usage status of the data analysis result by the first network device, so as to assist in evaluating the first performance information of the first model, thereby improving accuracy and reliability of evaluating the model performance information.

Optionally, in some embodiments, before the first network device sends the second information to the second network device or the third network device, the method further includes:
determining, by the first network device, the second information based on the first information.

In this embodiment of this application, the first network device can determine, based on the first information, whether to perform a first network operation based on the data analysis result (that is, determine, based on the first information, whether to use the data analysis result), so as to determine the second information. Optionally, the status of using the data analysis result is used to assist the second network device or the third network device in evaluating the first performance information of the first model, where the first model is a model obtained by the third network device through a model training process, and the first model is used for generating the data analysis result by the second network device.

Optionally, in some embodiments, the second information includes first indication information, and the first indication information is used to indicate whether the first network device has performed a first network operation based on the data analysis result.

It should be understood that a network operation determined based on the data analysis result may be the same as or different from a network operation not determined based on the data analysis result. Alternatively, if they are the same, it may be understood that the first network operation performed based on the data analysis result may not affect the network or the data in the network, and if they are different, it may be understood that the data analysis result may affect the network or the data in the network. In a case that the network operation is not determined based on the data analysis result, the first network device may determine its network operation based on its previous logic and preset conditions. Because the first indication information indicates whether the first network device has performed the first network operation based on the data analysis result, so as to determine a supervision behavior of the first model based on the first indication information. For example, in a case that the first network operation is performed based on the data analysis result and the network or data in the network is affected, the first performance information of the first model is not evaluated, or related data affecting evaluation of the first performance information is filtered out during evaluation, thus improving accuracy and reliability of evaluating the model performance information.

Optionally, in some embodiments, the second information further includes at least one of the following information:
type information or description information of the first network operation;
first time information, where the first time information is used to indicate a time range for performing the first network operation;
first location information, where the first location information is used to indicate a location range for performing the first network operation; and
first object information, where the first object information is used to indicate an object that performs the first network operation, and the object includes at least one of a user equipment object, an area object, and a network element object.

It should be understood that the first time information can alternatively be understood as indicating a time range being not recommended for evaluating the first performance information of the first model, that is, data not within this time range is not used for evaluating the first performance information of the first model. The first location information can alternatively be understood as indicating a location range being not recommended for evaluating the first performance information of the first model, that is, data not within this location range is not used for evaluating the first performance information of the first model. The first object information can alternatively be understood as indicating an object being not recommended for evaluating the first performance information of the first model, that is, data not corresponding to the first object information is not used for evaluating the first performance information of the first model. Alternatively, in some embodiments, the second information may further include other indication information for indicating at least one of a time range not for evaluating the first performance information of the first model, a location range not for evaluating the first performance information of the first model, and an object not for evaluating the first performance information of the first model.

Optionally, the type information of the first network operation may include slice selection, network load balancing, terminal access control, and the like. The description information may be comprehensive information added with information such as object, time and location and type information, for example, when an access control operation is to be performed for a terminal. The location may be understood as an area.

In this embodiment of this application, the type information or description information of the first network operation, the first time information, and the first object information are sent to the second network device or the third network device; therefore, based on the type information or description information of the first network operation, the first time information and the first object information, the second network device or the third network device can determine related data that affects evaluation of the first performance information, so as to filter out or remove the related data during the evaluation, or to collect other related data than such related data for evaluation of the first performance information of the first model.

Optionally, in some embodiments, the second information further includes:
second indication information, where the second indication information is used to indicate whether the first network operation affects evaluation of the first performance information of the first model (the second network device or the third network device), or whether the first network operation affects evaluation of correctness of the data analysis result.

In this embodiment of this application, the second indication information is further fed back. In a case that the first network device performs the first network operation based on the data analysis result and the network or the data in the network is not affected, the second network device or the third network device may collect all data (that is, full-set data) used for evaluating the first performance information, and then evaluate the first performance information based on all the collected data. In this way, the amount of data for evaluating the first performance information is increased, further improving accuracy of evaluating the first performance information of the first model.

Optionally, in some embodiments, the second information further includes at least one of the following data analysis task information corresponding to the data analysis result:
task identification information;
conditional limitation information of a task; and
analysis object information of a task.

The task identification information, the conditional limitation information of the task, and the analysis object information of the task may be used to determine specific tasks. The task identification information is used to indicate a task specific to the second information. Alternatively, a specific task may be determined based on the three pieces of information or the first two pieces of information. The conditional limitation information of the task may be referred to as analytic filter information (Analytic filter information), which is used to indicate filtering information of the data analysis result, including, for example, area of interest (Areas of interest, AOI), single network slice selection assistance information (Single Network Slice Selection Assistance Information, S-NSSAI), and data network name (Data Network Name, DNN). The analysis object information of the task may be understood as a target of analytic reporting (Target of analytic reporting), which is used to indicate whether an object of task analysis is a terminal, multiple terminals, all terminals, a network element, multiple network elements, or all network elements.

Optionally, in some embodiments, the first information further includes at least one of the following information corresponding to the data analysis result:
confidence information, where the confidence information is used to indicate a credibility degree of the data analysis result by the second network device;
second performance information of the first model; and
an interested-data type, where the interested-data type is used for determining the second indication information.

Optionally, the confidence information may include three confidence levels: high, medium, and low.

Optionally, the second performance information may be understood as model performance information during training of the first model, that is, a result of evaluating the model by the third network device during model training, for example, using a training test data set to calculate accuracy in training (accuracy in training, AiT) of the model during the training. An expression form of model performance information is not specifically limited, and it can indicate accuracy or error of an inference result of a model for a task from a positive or negative perspective. For example, inference accuracy of the first model may be indicated from the negative perspective by calculating an inference error or inference error rate of the model. The inference error or inference error rate may be calculated in various manners, for example, mean absolute error (Mean Absolute Error, MAE) or mean square error (Mean Square Error, MSE). It may alternatively be accuracy from the positive perspective, such as accuracy and precision.

Optionally, the interested-data type is used to indicate a specific data type concerned about, such as load information of a network-side device. This can help the first network device to determine whether its network operation affects the environment. For example, the first network device can determine whether its own network operation may affect the data type.

It should be noted that when determining a network operation, the first network device can determine, based on the confidence information and the second performance information in the first information, whether the data analysis result is credible, so as to determine whether the data analysis result can be used. For example, when a session management function (Session Management Function, SMF) network element selects a UPF based on network load information, if an analysis result of the received network load information shows that a network load of an UPF at a time point in the future is low, the SMF may select the UPF (performing the network operation). Further, the SMF learns in advance that a UPF may have a low load and chooses this UPF, but the load of the UPF is not as low as originally analyzed/predicted; consequently, the network operation affects the network environment (data in the network environment, such as a load degree of the UPF here). On the contrary, if the confidence in the first information is relatively low, and/or performance during model training is not very good, or the internal logic and conditions of some first network devices cause the first network device to determine not to use the data analysis result, the network operation performed by the first network device may not be affected by the data analysis result, nor affect the network environment.

Optionally, in some embodiments, after the first network device sends the second information to the second network device or the third network device, the method further includes:
the first network device receives the first performance information from the second network device or the third network device.

In this embodiment of this application, the second network device may supervise the first model, or the third network device may supervise the first model. In a case that the first model is supervised by the third network device, the third network device sends the first performance information to the second network device, and then the second network side forwards the first performance information to the first network device; or the third network device directly sends the first performance information to the first network device.

It should be noted that in a case that the first model is supervised by the second network device, the second network device can start a data collection operation after feeding back the first information; or after receiving the second information, starts a data collection operation. The data collection operation may be understood as collecting data that can be used for evaluating the first performance information. For example, in some embodiments, the second network device may start a data collection operation after feeding back the first information; may determine related data corresponding to the second information after receiving the second information, and then does not collect the related data or removes (or filters out) the related data from the collected full-set data, so as to obtain target data finally used for evaluating the first performance information; and finally evaluates the first performance information based on the determined target data. In a case that the first model is supervised by the third network device, the second network device forwards the received second information to the third network device. After receiving the second information, the third network device may determine the related data corresponding to the second information, and then does not collect the related data or removes (or filters out) the related data from the collected full-set data, so as to obtain final target data for evaluating the first performance information; and finally evaluates the first performance information based on the determined target data.

Optionally, in some embodiments, the sending, by the first network device, second information to the second network device or a third network device includes:
sending, by the first network device, N pieces of second information to the second network device or the third network device, where N is an integer greater than 1, and the N pieces of second information are determined by the first network device based on N pieces of first information.

It should be noted that feedback may be given immediately upon reception of the first information, or feedback may be given after the preset conditions are met. For example, in some embodiments, the sending, by the first network device, second information to the second network device or a third network device includes:
sending, by the first network device, the N pieces of second information to the second network device or the third network device when a preset reporting time point or an ending moment of a preset reporting time period is reached; or
sending, by the first network device, the N pieces of second information to the second network device or the third network device when the first network device determines that the number of pieces of unsent second information reaches N.

Optionally, the feeding back the N pieces of second information when the preset reporting time point or the ending moment of the preset reporting time period is reached may be understood as: triggering based on time conditions to feed back the second information, for example, collecting a network operation status for a whole day and sending it to the second network device or the third network device together. The first network device feeding back N pieces of second information when determining that the number of pieces of unsent second information reaches N may be understood as: triggering feedback of the second information based on a quantity condition, for example, when statuses of 50 network operations are collected (such as 50 pieces of first information have been received), they are sent to the second network device or the third network device together. Optionally, in some embodiments, each piece of first information may correspond to one network operation and one piece of second information.

Further, in some embodiments, the method further includes: sending, by the first network device, at least one of the following information to the second network device or the third network device:
the number N of pieces of the second information; and
the preset reporting time point or the preset reporting time period.

In this embodiment of this application, the number N of pieces of the second information and the preset reporting time point or the preset reporting time period may be sent along with the N pieces of second information through same signaling or different signaling, which is not further limited here.

To better understand this application, the following are detailed descriptions based on some examples.

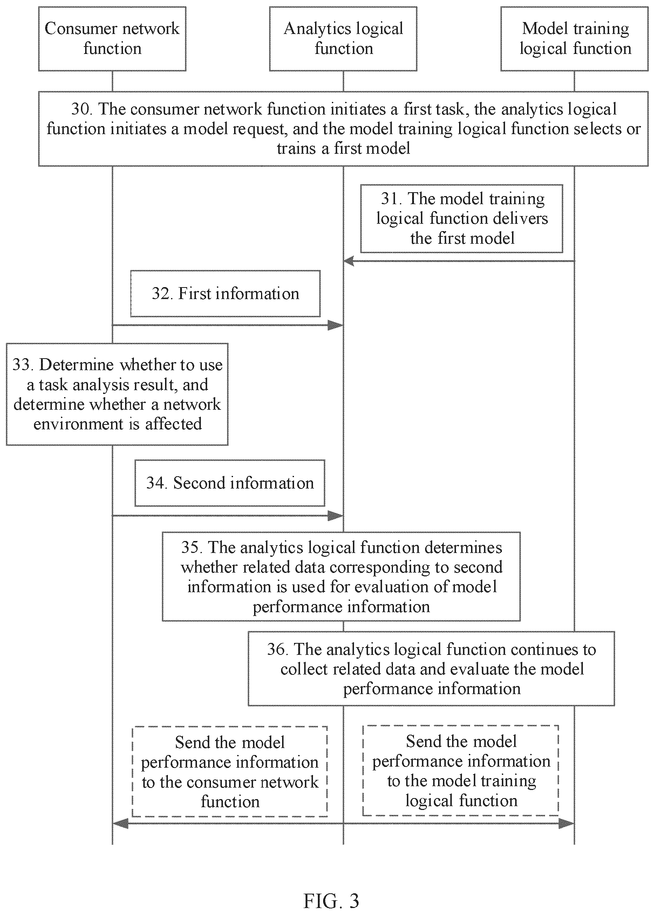

Embodiment 1: The first model is supervised by an AnLF. Referring to FIG. 3, the following processes may be specifically included:
Step 30: A consumer (consumer) initiates a first task, an AnLF initiates a model request, and an MTLF selects or trains a first model that meets requirements of the first task. The concept of the first task is similar to that of the first task in step 202, and is also similar to that of the data analysis task described above.
Step 31: The MTLF delivers the first model to the AnLF, and the AnLF then uses the first model to generate a data analysis result.
Step 32: The AnLF sends first information to the consumer, where the first information includes the data analysis result. Specifically, the AnLF may use the first model obtained in step 31 for evaluation and inference, so as to obtain an output value, that is, the data analysis result of the first task, such as a network element load prediction for a network element. The AnLF feeds back the data analysis result to the consumer, and may also inform the consumer about related information about the data analysis result, where such related information can help the consumer determine whether to use the data analysis result.

Besides the data analysis result and the related information, the first information may include at least one of the following:
identification information, used to inform a specific task to the AnLF; which, for example, may include at least one of task identification information, conditional limitation information of a task, and analysis object information of the task; and
model identification information.

The related information may include at least one of confidence information, model performance information during training of the first model, and tag type of interest.

Step 33: Based on the first information fed back by the AnLF in step 32, the consumer determines whether to use the data analysis result to determine a network operation to be performed, and may also determine whether his own network operation affects a network environment. After receiving the feedback from step 2, the consumer may determine, based on the data analysis result in the first information fed back, the network operation to be performed. During determining of the network operation, whether the data analysis result is credible and usable may be determined based on the related information of the data analysis result in the first information fed back. For example, when the SMF network element selects a UPF based on network load information, if a received analysis result of the network load information shows that a network load of an UPF at a time point in the future is low, the SMF may select the UPF (performing an action). Further, the SMF learns in advance that a UPF may have a low load and chooses this UPF, but the load of the UPF is not as low as originally analyzed/predicted; consequently, the action has affected the network environment (data in the network environment, such as a load degree of the UPF here). On the contrary, if the confidence in the first information is relatively low, and/or a performance status during model training is not very good, or the internal logic and conditions of some consumers cause the consumer to determine not to use the analysis result, the action performed by the consumer may not be affected by the analysis result, nor affect the network environment.

Step 34: The consumer informs the AnLF through the second information whether the analysis result has been used for determining a network operation and the like. The consumer may feed back to the AnLF through the second information whether the network operation has been performed based on the analysis result, and may also feed back whether the action affects the network environment and/or data in the network. Based on such information, the AnLF may determine whether to collect related data to evaluate the model performance information. Specifically, in step 33, the consumer chooses to perform a network operation based on the data analysis result, for example, choosing a UPF, and then may inform the AnLF that the consumer has used the analysis result and has performed the network operation. The consumer may alternatively further inform the AnLF that the action of the consumer may affect the network environment and the data in the network. The signaling (signaling carrying the second information) may further carry identification information, such as analysis task identification information, conditional limitation information of a task, analysis object information of the task, and model identification information. The identification information is used to indicate to the AnLF a task and/or model specific to the value fed back by the consumer.

Step 35: The AnLF determines whether the related data corresponding to this feedback can be used to evaluate the model performance information. Based on the second information fed back by the consumer in step 34, the AnLF determines whether to collect related data, or whether to take related data corresponding to the action (the action determined based on the data analysis result in the first information) into account during evaluation of model performance information. For example, the second information fed back by the consumer in step 34 indicates that the network operation has been performed based on the data analysis result, the AnLF may determine (the target task and/or model and) corresponding related data (including input data, output data, tag data, and the like of the model) based on the identification information and a feedback time, and choose not to collect such data; or, removes such data during evaluation of the performance information.

Step 36: The AnLF collects other related data, evaluates the model performance information of the first model, and determines a subsequent operation after evaluating the model performance information, including at least one of the following:
inform the model performance information to the consumer;
inform the model performance information and/or related data to the MTLF; and
store the model performance information and/or related data into an analytics data repository function (Analytics Data Repository Function, ADRF).

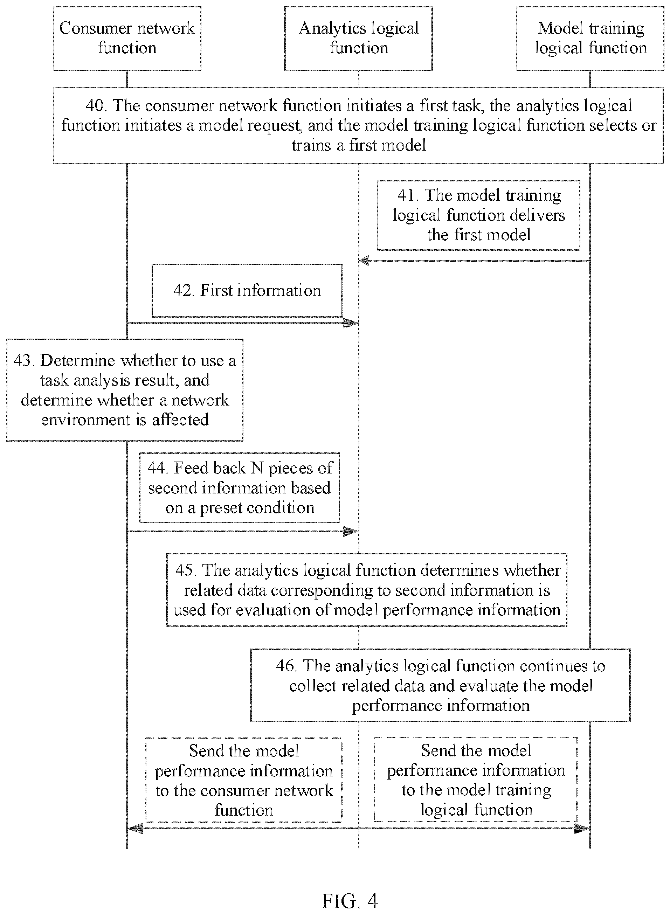

Embodiment 2: The first model is supervised by an MTLF. Referring to FIG. 4, in this embodiment, upon receiving first information, feedback is not immediately performed after each network operation using a data analysis result is performed and second information is determined. Instead, it waits until preset conditions are met, and then feeds back temporarily stored N pieces of second information to the AnLF.

The preset conditions may include at least one of the following:
a time condition, a specific time, for example, collecting a network operation status for a whole day, and then sending all second information corresponding to the actions in that day to the AnLF; and
a quantity condition, a specific number, for example, collecting 50 network operation statuses, and then sending all second information corresponding to the 50 network operations to the AnLF.

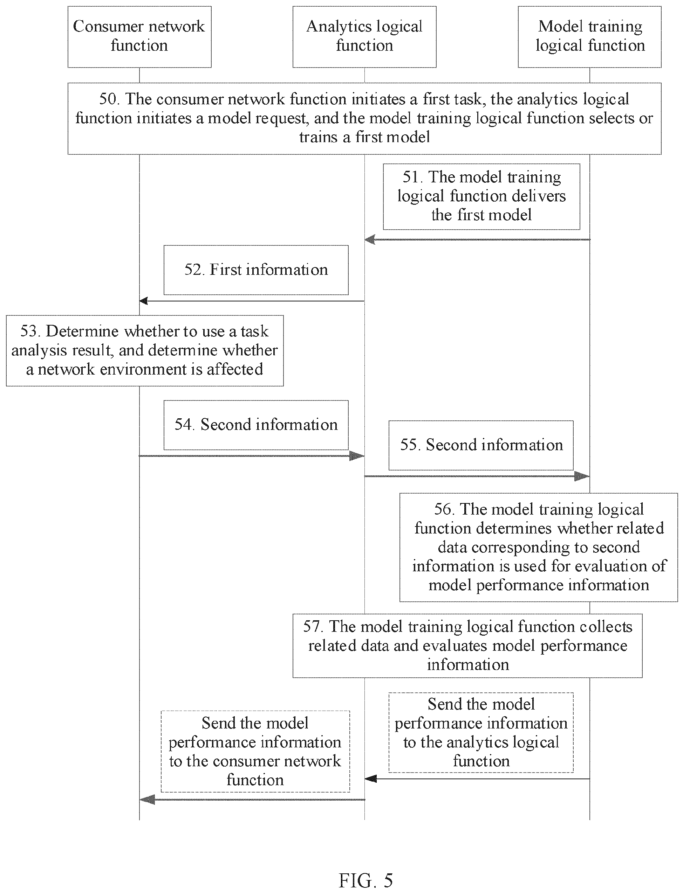

Embodiment 3: The first model is supervised by an MTLF. Referring to FIG. 5, a difference between this embodiment and embodiment 1 lies in that the MTLF supervises the first model and evaluates the model performance information. Specifically, after an AnLF receives second information, the AnLF sends the second information to the MTLF. That is, the AnLF forwards the second information received from the consumer.

In addition, the MTLF determines whether to collect related data corresponding to the network operation (or the second information) or whether to take the related data into account during evaluation of performance information. Finally, the AnLF collects other related data, evaluates model performance information of the first model, and determines a subsequent operation after evaluating the model performance information, including at least one of the following:
inform the model performance information to the AnLF, and then the AnLF forwards it to the consumer;
inform the model performance information and/or related data to the AnLF; and
store the model performance information and/or related data to an ADRF and the like.

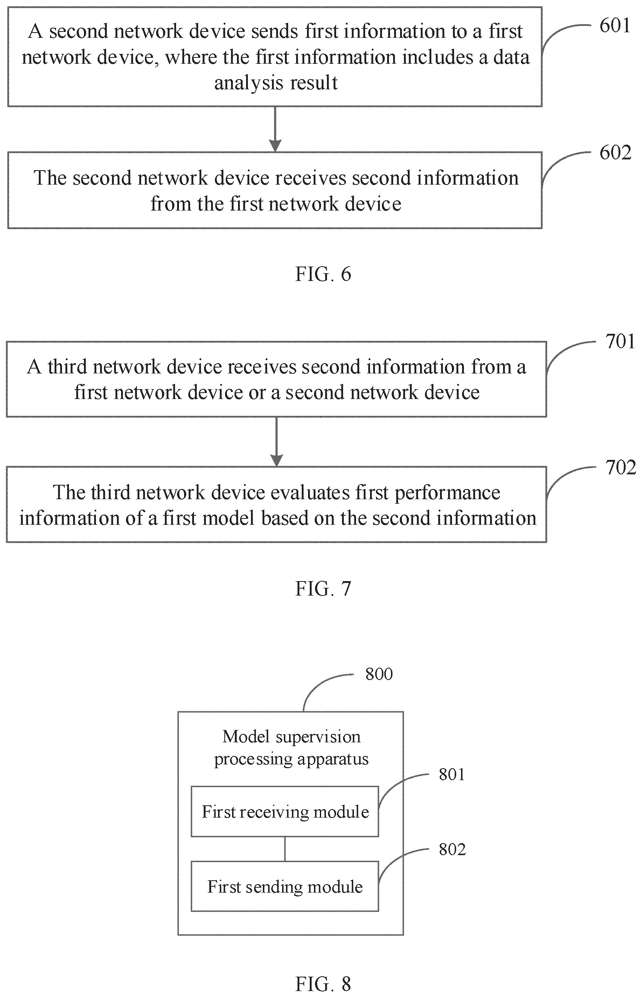

Referring to FIG. 6, an embodiment of this application further provides a model supervision processing method, as shown in FIG. 6. The model supervision processing method includes the steps.

Step 601: A second network device sends first information to a first network device, where the first information includes a data analysis result.

Step 602: The second network device receives second information from the first network device, where the second information is used to indicate a usage status of the data analysis result by the first network device.

Optionally, the status of using the data analysis result is used to assist the second network device or the third network device in evaluating the first performance information of the first model, where the first model is a model obtained by the third network device through a model training process, and the first model is used for generating the data analysis result by the second network device.

Optionally, the method further includes:
evaluating, by the second network device, first performance information of a first model based on the second information, where the first model is a model obtained by a third network device through a model training process, and the first model is used for generating the data analysis result by the second network device.

Optionally, the second information includes first indication information, and the first indication information is used to indicate whether the first network device has performed a first network operation based on the data analysis result.

Optionally, the second information further includes at least one of the following information:
type information or description information of the first network operation;
first time information, where the first time information is used to indicate a time range for performing the first network operation;
first location information, where the first location information is used to indicate a location range for performing the first network operation; and
first object information, where the first object information is used to indicate an object that performs the first network operation, and the object includes at least one of a user equipment object, an area object, and a network element object.

Optionally, the second information further includes:
second indication information, where the second indication information is used to indicate whether the first network operation affects evaluation of the first performance information of the first model, or whether the first network operation affects evaluation of correctness of the data analysis result.

Optionally, the second information further includes at least one of the following data analysis task information corresponding to the data analysis result:
task identification information;
conditional limitation information of a task; and
analysis object information of a task.

Optionally, the evaluating, by the second network device, first performance information of a first model based on the second information includes:
collecting, by the second network device, target data based on the second information; and
evaluating, by the second network device, the first performance information of the first model based on the target data.

Optionally, in a case that the first indication information in the second information indicates that the first network device has performed a first network operation based on the data analysis result, the target data includes data unrelated to the first network operation.

Optionally, the collecting, by the second network device, target data based on the second information includes at least one of the following:
determining, by the second network device based on first time information in the second information, data unrelated to the first time information as the target data;
determining, by the second network device based on first object information in the second information, data unrelated to the first object information as the target data; and
determining, by the second network device based on first location information in the second information, data unrelated to the first location information as the target data.

Optionally, the collecting, by the second network device, target data based on the second information includes:
determining, by the second network device based on first time information in the second information, data unrelated to the first time information as the target data;
determining, by the second network device based on first object information in the second information, data unrelated to the first object information as the target data; and
determining, by the second network device based on first location information in the second information, data unrelated to the first location information as the target data.

In this embodiment of this application, the fourth network device may be understood as a data source (data source) network element.

Optionally, in a case that first indication information in the second information indicates that the first network device has not performed a first network operation based on the data analysis result, the target data includes full-set data that is used for evaluating the first performance information and that is obtained by the second network device from a fourth network device based on data analysis task information corresponding to the second information.

Optionally, after the second network device receives the second information from the first network device, the method further includes:
sending, by the second network device, the second information to a third network device.

Optionally, the receiving, by the second network device, second information from the first network device includes:
receiving, by the second network device, N pieces of second information from the first network device, where N is an integer greater than 1, and the N pieces of second information are determined by the first network device based on N pieces of first information.

Optionally, the method further includes:
receiving, by the second network device, at least one of the following information from the first network device:
the number N of pieces of the second information; and
a preset reporting time point or a preset reporting time period.

Optionally, the first information further includes at least one of the following:
confidence information, where the confidence information is used to indicate a credibility degree of the data analysis result by the second network device;
second performance information of the first model; and
an interested-data type, where the interested-data type is used for determining the second indication information.

Referring to FIG. 7, an embodiment of this application further provides a model supervision processing method, as shown in FIG. 7. The model supervision processing method includes the steps.

Step 701: A third network device receives second information from a first network device or a second network device, where the second information is used to indicate a status of using a data analysis result by the first network device.

Step 702: The third network device evaluates first performance information of a first model based on the second information, where the first model is a model obtained by the third network device through a model training process, and the first model is used for generating the data analysis result by the second network device.

Optionally, the status of using the data analysis result is used to assist the second network device or the third network device in evaluating the first performance information of the first model.

Optionally, the second information includes first indication information, and the first indication information is used to indicate whether the first network device has performed a first network operation based on the data analysis result.

Optionally, the second information further includes at least one of the following information:
type information or description information of the first network operation;
first time information, where the first time information is used to indicate a time range for performing the first network operation;
first location information, where the first location information is used to indicate a location range for performing the first network operation; and
first object information, where the first object information is used to indicate an object that performs the first network operation, and the object includes at least one of a user equipment object, an area object, and a network element object.

Optionally, the second information further includes:
second indication information, where the second indication information is used to indicate whether the first network operation affects evaluation of the first performance information of the first model, or whether the first network operation affects evaluation of correctness of the data analysis result.

Optionally, the second information further includes at least one of the following data analysis task information corresponding to the data analysis result:
task identification information;
conditional limitation information of a task; and
analysis object information of a task.

Optionally, the evaluating, by the third network device, first performance information of a first model based on the second information includes:
collecting, by the third network device, target data based on the second information; and
evaluating, by the third network device, the first performance information of the first model based on the target data.

Optionally, in a case that the first indication information in the second information indicates that the first network device has performed a first network operation based on the data analysis result, the target data includes data unrelated to the first network operation.

Optionally, the collecting, by the third network device, target data based on the second information includes at least one of the following:
determining, by the third network device based on first time information in the second information, data unrelated to the first time information as the target data;
determining, by the third network device based on first object information in the second information, data unrelated to the first object information as the target data; and
determining, by the third network device based on first location information in the second information, data unrelated to the first location information as the target data.

Optionally, the collecting, by the third network device, target data based on the second information includes:
obtaining, by the third network device based on data analysis task information corresponding to the second information, full-set data for evaluating the first performance information from a fourth network device; and
removing, by the third network device based on first time information in the second information, data related to the first time information from the full-set data, so as to obtain the target data; and/or removing, by the third network device based on first object information in the second information, data related to the first object information from the full-set data, so as to obtain the target data; and/or removing, by the third network device based on first location information in the second information, data related to the first location information from the full-set data, so as to obtain the target data.

Optionally, in a case that first indication information in the second information indicates that the first network device has not performed a first network operation based on the data analysis result, the target data includes full-set data that is used for evaluating the first performance information and that is obtained by the third network device from a fourth network device based on data analysis task information corresponding to the second information.

Optionally, the receiving, by a third network device, second information from a first network device or a second network device includes:
receiving, by the third network device, N pieces of second information from the first network device or the second network device, where N is an integer greater than 1, the N pieces of second information are determined by the first network device based on N pieces of first information, and the first information includes the data analysis result.

Optionally, the method further includes:
receiving, by the third network device, at least one of the following information from the first network device or the second network device:
the number N of pieces of the second information; and
a preset reporting time point or a preset reporting time period.

Optionally, the first information further includes at least one of the following:
confidence information, where the confidence information is used to indicate a credibility degree of the data analysis result by the second network device;
second performance information of the first model; and
an interested-data type, where the interested-data type is used for determining the second indication information.

Referring to FIG. 8, an embodiment of this application further provides a model supervision processing apparatus. As shown in FIG. 8, the model supervision processing apparatus 800 includes:
a first receiving module 801, configured to receive first information from a second network device, where the first information includes a data analysis result; and
a first sending module 802, configured to send second information to the second network device or a third network device, where the second information is used to indicate a usage status of the data analysis result by the first network device.

Optionally, the status of using the data analysis result is used to assist the second network device or the third network device in evaluating the first performance information of the first model, where the first model is a model obtained by the third network device through a model training process, and the first model is used for generating the data analysis result by the second network device.

Optionally, the model supervision processing apparatus 800 further includes:
a first determining module, configured to determine the second information based on the first information.

Optionally, the second information includes first indication information, and the first indication information is used to indicate whether the first network device has performed a first network operation based on the data analysis result.

Optionally, the second information further includes at least one of the following information:
type information or description information of the first network operation;
first time information, where the first time information is used to indicate a time range for performing the first network operation;
first location information, where the first location information is used to indicate a location range for performing the first network operation; and
first object information, where the first object information is used to indicate an object that performs the first network operation, and the object includes at least one of a user equipment object, an area object, and a network element object.

Optionally, the second information further includes:
second indication information, where the second indication information is used to indicate whether the first network operation affects evaluation of the first performance information of the first model, or whether the first network operation affects evaluation of correctness of the data analysis result.

Optionally, the second information further includes at least one of the following data analysis task information corresponding to the data analysis result:
task identification information;
conditional limitation information of a task; and
analysis object information of a task.

Optionally, the first information further includes at least one of the following information corresponding to the data analysis result:
confidence information, where the confidence information is used to indicate a credibility degree of the data analysis result by the second network device;
second performance information of the first model; and
an interested-data type, where the interested-data type is used for determining the second indication information.

Optionally, the first sending module 802 is specifically configured to send N pieces of second information to the second network device or the third network device, where N is an integer greater than 1, and the N pieces of second information are determined by the first network device based on N pieces of first information.

Optionally, the first sending module 802 is specifically configured to send N pieces of second information to the second network device or the third network device when a preset reporting time point or an ending moment of a preset reporting time period is reached; or send, for the first network device, the N pieces of second information to the second network device or the third network device when the first network device determines that the number of pieces of unsent second information reaches N.

Optionally, the first sending module 802 is further configured to send at least one of the following information to the second network device or the third network device:
the number N of pieces of the second information; and
the preset reporting time point or the preset reporting time period.

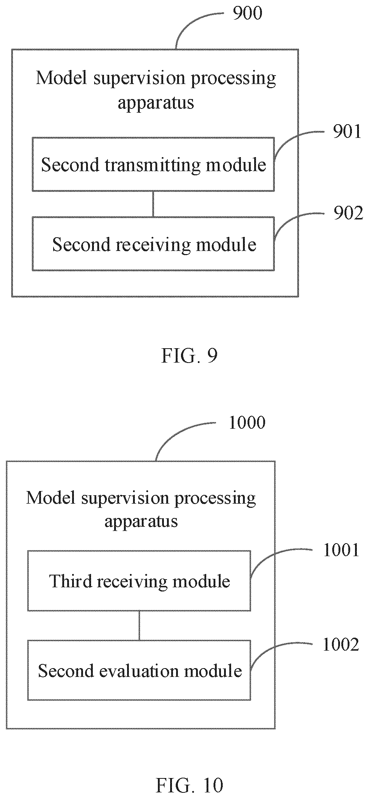

Referring to FIG. 9, an embodiment of this application further provides a model supervision processing apparatus. As shown in FIG. 9, the model supervision processing apparatus 900 includes:
a second sending module 901, configured to send first information to a first network device, where the first information includes a data analysis result; and
a second receiving module 902, configured to receive second information from the first network device, where the second information is used to indicate a usage status of the data analysis result by the first network device.

Optionally, the status of using the data analysis result is used to assist the second network device or the third network device in evaluating the first performance information of the first model, where the first model is a model obtained by the third network device through a model training process, and the first model is used for generating the data analysis result by the second network device.

Optionally, the model supervision processing apparatus 900 further includes:
a first evaluation module, configured to evaluate first performance information of a first model based on the second information, where the first model is a model obtained by the third network device through a model training process, and the first model is used for generating the data analysis result by the second network device.

Optionally, the second information includes first indication information, and the first indication information is used to indicate whether the first network device has performed a first network operation based on the data analysis result.

Optionally, the second information further includes at least one of the following information:
type information or description information of the first network operation;
first time information, where the first time information is used to indicate time information for performing the first network operation;
first object information, where the first object information is used to indicate an object that performs the first network operation, and the object includes at least one of a user equipment object, an area object, and a network element object.

Optionally, the second information further includes:
second indication information, where the second indication information is used to indicate whether the first network operation affects evaluation of the first performance information of the first model, or whether the first network operation affects evaluation of correctness of the data analysis result.

Optionally, the second information further includes at least one of the following data analysis task information corresponding to the data analysis result:
task identification information;
conditional limitation information of a task; and
analysis object information of a task.

Optionally, the first evaluation module includes:
a first collection unit, configured to collect target data based on the second information; and
a first measuring unit, configured to evaluate the first performance information of the first model based on the target data.

Optionally, in a case that the first indication information in the second information indicates that the first network device has performed a first network operation based on the data analysis result, the target data includes data unrelated to the first network operation.

Optionally, the first collection unit is specifically configured to perform at least one of the following:
determining, based on first time information in the second information, data unrelated to the first time information as the target data;
determining, based on first object information in the second information, data unrelated to the first object information as the target data; and
determining data unrelated to the first location information as the target data based on the first location information in the second information.

Optionally, the first evaluation unit is specifically configured to:
obtain, based on data analysis task information corresponding to the second information, full-set data for evaluating the first performance information from a fourth network device; and
remove, based on first time information in the second information, data related to the first time information from the full-set data, so as to obtain the target data; and/or remove, based on first object information in the second information, data related to the first object information from the full-set data, so as to obtain the target data; and/or remove, based on first location information in the second information, data related to the first location information from the full-set data, so as to obtain the target data.

Optionally, in a case that first indication information in the second information indicates that the first network device has not performed a first network operation based on the data analysis result, the target data includes full-set data that is used for evaluating the first performance information and that is obtained by the second network device from a fourth network device based on data analysis task information corresponding to the second information.

Optionally, the second sending module 901 is further configured to send the second information to a third network device.

Optionally, the second receiving module 902 is specifically configured to receive N pieces of second information from the first network device, where N is an integer greater than 1, and the N pieces of second information are determined by the first network device based on N pieces of first information.

Optionally, the second receiving module 902 is further configured to receive at least one of the following information from the first network device:
the number N of pieces of the second information; and
a preset reporting time point or a preset reporting time period.

Optionally, the first information further includes at least one of the following:
confidence information, where the confidence information is used to indicate a credibility degree of the data analysis result by the second network device;
second performance information of the first model; and
an interested-data type, where the interested-data type is used for determining the second indication information.

Referring to FIG. 10, an embodiment of this application further provides a model supervision processing apparatus. As shown in FIG. 10, the model supervision processing apparatus 1000 includes:
a third receiving module 1001, configured to receive second information from a first network device or a second network device, where the second information is used to indicate a status of using a data analysis result by the first network device; and
a second evaluation module 1002, configured to evaluate first performance information of a first model based on the second information, where the first model is a model obtained by the third network device through a model training process, and the first model is used for generating the data analysis result by the second network device.

Optionally, the status of using the data analysis result is used to assist the second network device or the third network device in evaluating the first performance information of the first model.

Optionally, the second information includes first indication information, and the first indication information is used to indicate whether the first network device has performed a first network operation based on the data analysis result.

Optionally, the second information further includes at least one of the following information:
type information or description information of the first network operation;
first time information, where the first time information is used to indicate a time range for performing the first network operation;
first location information, where the first location information is used to indicate a location range for performing the first network operation; and
first object information, where the first object information is used to indicate an object that performs the first network operation, and the object includes at least one of a user equipment object, an area object, and a network element object.

Optionally, the second information further includes:
second indication information, where the second indication information is used to indicate whether the first network operation affects evaluation of the first performance information of the first model, or whether the first network operation affects evaluation of correctness of the data analysis result.

Optionally, the second information further includes at least one of the following data analysis task information corresponding to the data analysis result:
task identification information;
conditional limitation information of a task; and
analysis object information of a task.

Optionally, the second evaluation module 1002 includes:
a second collection unit, configured to collect target data based on the second information; and
a second evaluation unit, configured to evaluate the first performance information of the first model based on the target data.

Optionally, in a case that the first indication information in the second information indicates that the first network device has performed a first network operation based on the data analysis result, the target data includes data unrelated to the first network operation.

Optionally, the second collection unit is specifically configured to perform at least one of the following:
determining, based on first time information in the second information, data unrelated to the first time information as the target data;
determining, based on first object information in the second information, data unrelated to the first object information as the target data; and
determining data unrelated to the first location information as the target data based on the first location information in the second information.

Optionally, the second collecting unit is specifically configured to:
obtain, based on data analysis task information corresponding to the second information, full-set data for evaluating the first performance information from a fourth network device; and
remove, based on first time information in the second information, data related to the first time information from the full-set data, so as to obtain the target data; and/or remove, based on first object information in the second information, data related to the first object information from the full-set data, so as to obtain the target data; and/or remove, based on first location information in the second information, data related to the first location information from the full-set data, so as to obtain the target data.

Optionally, in a case that first indication information in the second information indicates that the first network device has not performed a first network operation based on the data analysis result, the target data includes full-set data that is used for evaluating the first performance information and that is obtained by the third network device from a fourth network device based on data analysis task information corresponding to the second information.

Optionally, the third receiving module 1001 is specifically configured to:
receive N pieces of second information from the first network device or the second network device, where N is an integer greater than 1, the N pieces of second information are determined by the first network device based on N pieces of first information, and the first information includes the data analysis result.

Optionally, the third receiving module 1001 is specifically configured to receive at least one of the following information from the first network device or the second network device:
the number N of pieces of the second information; and
a preset reporting time point or a preset reporting time period.

Optionally, the first information further includes at least one of the following:
confidence information, where the confidence information is used to indicate a credibility degree of the data analysis result by the second network device;
second performance information of the first model; and
an interested-data type, where the interested-data type is used for determining the second indication information.

The model supervision processing apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The model supervision processing apparatus provided in this embodiment of this application can implement the processes implemented in the method embodiments in FIG. 2 to FIG. 7, with the same technical effects achieved. To avoid repetition, details are not described herein again.

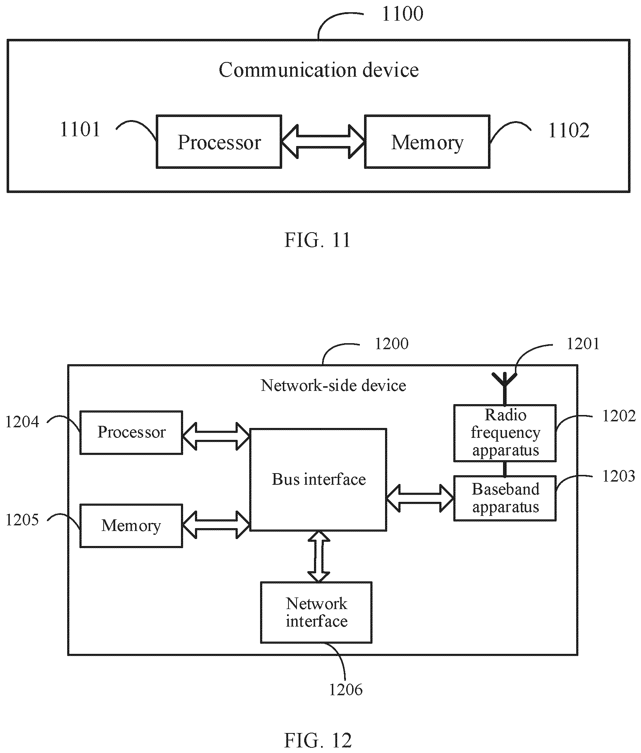

Optionally, as shown in FIG. 11, an embodiment of this application further provides a communication device 1100, including a processor 1101 and a memory 1102, and the memory 1102 stores a program or instructions capable of running on the processor 1101. When the program or instructions are executed by the processor 1101, the steps of the foregoing embodiments of the model supervision processing method may be implemented, with the same technical effects achieved. To avoid repetition, details are not described herein again.

An embodiment of this application further provides a network-side device, including a processor and a communication interface; where
in a case that the network-side device is a first network device, the communication interface is configured to receive first information from a second network device, where the first information includes a data analysis result; and send second information to the second network device or a third network device, where the second information is used to indicate a usage status of the data analysis result by the first network device;
in a case that the network-side device is a second network device, the communication interface is configured to send first information to a first network device, where the first information includes a data analysis result; and receive second information from the first network device, where the second information is used to indicate a usage status of the data analysis result by the first network device; and
in a case that the network-side device is a third network device, the communication interface is configured to receive second information from a first network device or a second network device, where the second information is used to indicate a status of using a data analysis result by the first network device; and the processor is configured to evaluate first performance information of a first model based on the second information, where the first model is a model obtained by the third network device through a model training process, and the first model is used for generating the data analysis result by the second network device.

The network-side device embodiment corresponds to the foregoing network-side device method embodiment, and the implementation processes and implementations of the foregoing method embodiments may be applied to the network-side device embodiments, with the same technical effects achieved.

Specifically, an embodiment of this application further provides a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The method performed by the network-side device in the foregoing embodiment may be implemented in the baseband apparatus 1203, and the baseband apparatus 1203 includes a baseband processor.

The baseband apparatus 1203 may include, for example, at least one baseband processing unit, where a plurality of chips are disposed on the baseband processing unit. As shown in FIG. 12, one of the chips is, for example, the baseband processor, and connected to the memory 1205 through a bus interface, to invoke the program in the memory 1205 to perform the operations of the network-side device shown in the foregoing method embodiment.

The network-side device may further include a network interface 1206, where the interface is, for example, a common public radio interface (common public radio interface, CPRI).

Specifically, the network-side device 1200 according to this embodiment of this disclosure further includes instructions or programs stored in the memory 1205 and capable of running on the processor 1204, and the processor 1204 calls the instructions or programs in the memory 1205 to execute the methods performed by the modules shown in FIG. 8 to FIG. 10, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the model supervision processing method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the model supervision processing method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the model supervision processing method, with the same technical effects achieved. To avoid repetition, details are not repeated herein.

An embodiment of this application further provides a communication system, which includes a first network device, a second network device, and a third network device, where the first network device is configured to execute the processes of the method embodiments of the first network device as shown in FIG. 2, the second network device is configured to execute the processes of the method embodiments of the second network device as shown in FIG. 6, and the third network device is configured to execute the processes of the method embodiments of the third network device as shown in FIG. 7, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on this understanding, the technical scheme of this application may be embodied in the form of a computer software product, which is stored in a storage medium (such as ROM/RAM, magnetic disk and optical disk) and includes several instructions to make a terminal (which may be a mobile phone, a computer, a server, an air conditioner, a network device, or the like) execute the methods described in various embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A model supervision processing method, comprising:
receiving, by a first network device, first information from a second network device, wherein the first information comprises a data analysis result; and
sending, by the first network device, second information to the second network device or a third network device, wherein the second information is used to indicate a usage status of the data analysis result by the first network device.

2. The method according to claim 1, wherein the status of using the data analysis result is used to assist the second network device or the third network device in evaluating first performance information of a first model, the first model is a model obtained by the third network device through a model training process, and the first model is used for generating the data analysis result by the second network device.

3. The method according to claim 1, wherein the second information comprises first indication information, and the first indication information is used to indicate whether the first network device has performed a first network operation based on the data analysis result.

4. The method according to claim 2, wherein the second information further comprises at least one of the following information:
type information or description information of the first network operation;
first time information, wherein the first time information is used to indicate a time range for performing the first network operation;
first location information, wherein the first location information is used to indicate a location range for performing the first network operation; and
first object information, wherein the first object information is used to indicate an object that performs the first network operation, and the object comprises at least one of a user equipment object, an area object, and a network element object.

5. The method according to claim 3 or 4, wherein the second information further comprises:
second indication information, wherein the second indication information is used to indicate whether the first network operation affects evaluation of the first performance information of the first model, or whether the first network operation affects evaluation of correctness of the data analysis result.

6. The method according to any one of claims 3 to 5, wherein the second information further comprises at least one of the following data analysis task information corresponding to the data analysis result:
task identification information;
conditional limitation information of a task; and
analysis object information of a task.

7. The method according to any one of claims 1 to 6, wherein the first information further comprises at least one of the following information corresponding to the data analysis result:
confidence information, wherein the confidence information is used to indicate a credibility degree of the data analysis result by the second network device;
second performance information of the first model; and
an interested-data type, wherein the interested-data type is used for determining the second indication information.

8. The method according to any one of claims 1 to 7, wherein the sending, by the first network device, second information to the second network device or a third network device comprises:
sending, by the first network device, N pieces of second information to the second network device or the third network device, wherein N is an integer greater than 1, and the N pieces of second information are determined by the first network device based on N pieces of first information.

9. The method according to claim 8, wherein the sending, by the first network device, N pieces of second information to the second network device or the third network device comprises:
sending, by the first network device, the N pieces of second information to the second network device or the third network device when a preset reporting time point or an ending moment of a preset reporting time period is reached; or
sending, by the first network device, the N pieces of second information to the second network device or the third network device when the first network device determines that the number of pieces of unsent second information reaches N.

10. The method according to claim 9, wherein the method further comprises: sending, by the first network device, at least one of the following information to the second network device or the third network device:
the number N of pieces of the second information; and
the preset reporting time point or the preset reporting time period.

11. A model supervision processing method, comprising:
sending, by a second network device, first information to a first network device, wherein the first information comprises a data analysis result; and
receiving, by the second network device, second information from the first network device, wherein the second information is used to indicate a usage status of the data analysis result by the first network device.

12. The method according to claim 11, wherein the method further comprises:
evaluating, by the second network device, first performance information of a first model based on the second information, wherein the first model is a model obtained by a third network device through a model training process, and the first model is used for generating the data analysis result by the second network device.

13. The method according to claim 11 or 12, wherein the second information comprises first indication information, and the first indication information is used to indicate whether the first network device has performed a first network operation based on the data analysis result.

14. The method according to claim 13, wherein the second information further comprises at least one of the following information:
type information or description information of the first network operation;
first time information, wherein the first time information is used to indicate a time range for performing the first network operation;
first location information, wherein the first location information is used to indicate a location range for performing the first network operation; and
first object information, wherein the first object information is used to indicate an object that performs the first network operation, and the object comprises at least one of a user equipment object, an area object, and a network element object.

15. The method according to claim 13 or 14, wherein the second information further comprises:
second indication information, wherein the second indication information is used to indicate whether the first network operation affects evaluation of the first performance information of the first model, or whether the first network operation affects evaluation of correctness of the data analysis result.

16. The method according to any one of claims 13 to 15, wherein the second information further comprises at least one of the following data analysis task information corresponding to the data analysis result:
task identification information;
conditional limitation information of a task; and
analysis object information of a task.

17. The method according to claim 12, wherein the evaluating, by the second network device, first performance information of a first model based on the second information comprises:
collecting, by the second network device, target data based on the second information; and
evaluating, by the second network device, the first performance information of the first model based on the target data.

18. The method according to claim 17, wherein in a case that first indication information in the second information indicates that the first network device has performed a first network operation based on the data analysis result, the target data comprises data unrelated to the first network operation.

19. The method according to claim 18, wherein the collecting, by the second network device, target data based on the second information comprises at least one of the following:
determining, by the second network device based on first time information in the second information, data unrelated to the first time information as the target data;
determining, by the second network device based on first object information in the second information, data unrelated to the first object information as the target data; and
determining, by the second network device based on first location information in the second information, data unrelated to the first location information as the target data.

20. The method according to claim 18, wherein the collecting, by the second network device, target data based on the second information comprises:
obtaining, by the second network device based on data analysis task information corresponding to the second information, full-set data for evaluating the first performance information from a fourth network device; and
removing, by the second network device based on first time information in the second information, data related to the first time information from the full-set data, so as to obtain the target data; and/or removing, by the second network device based on first object information in the second information, data related to the first object information from the full-set data, so as to obtain the target data; and/or removing, by the second network device based on first location information in the second information, data related to the first location information from the full-set data, so as to obtain the target data.

21. The method according to claim 17, wherein in a case that first indication information in the second information indicates that the first network device has not performed a first network operation based on the data analysis result, the target data comprises full-set data that is used for evaluating the first performance information and that is obtained by the second network device from a fourth network device based on data analysis task information corresponding to the second information.

22. The method according to claim 11, wherein after the second network device receives the second information from the first network device, the method further comprises:
sending, by the second network device, the second information to a third network device.

23. The method according to any one of claims 11 to 22, wherein the receiving, by the second network device, second information from the first network device comprises:
receiving, by the second network device, N pieces of second information from the first network device, wherein N is an integer greater than 1, and the N pieces of second information are determined by the first network device based on N pieces of first information.

24. The method according to claim 23, wherein the method further comprises:
receiving, by the second network device, at least one of the following information from the first network device:
the number N of pieces of the second information; and
a preset reporting time point or a preset reporting time period.

25. The method any one of claims 11 to 24, wherein the first information further comprises at least one of the following:
confidence information, wherein the confidence information is used to indicate a credibility degree of the data analysis result by the second network device;
second performance information of the first model; and
an interested-data type, wherein the interested-data type is used for determining the second indication information.

26. A model supervision processing method, comprising:
receiving, by a third network device, second information from a first network device or a second network device, wherein the second information is used to indicate a status of using a data analysis result by the first network device; and
evaluating, by the third network device, first performance information of a first model based on the second information, wherein the first model is a model obtained by the third network device through a model training process, and the first model is used for generating the data analysis result by the second network device.

27. The method according to claim 26, wherein the second information comprises first indication information, and the first indication information is used to indicate whether the first network device has performed a first network operation based on the data analysis result.

28. The method according to claim 27, wherein the second information further comprises at least one of the following information:
type information or description information of the first network operation;
first time information, wherein the first time information is used to indicate a time range for performing the first network operation;
first location information, wherein the first location information is used to indicate a location range for performing the first network operation; and
first object information, wherein the first object information is used to indicate an object that performs the first network operation, and the object comprises at least one of a user equipment object, an area object, and a network element object.

29. The method according to claim 27 or 28, wherein the second information further comprises:
second indication information, wherein the second indication information is used to indicate whether the first network operation affects evaluation of the first performance information of the first model, or whether the first network operation affects evaluation of correctness of the data analysis result.

30. The method according to any one of claims 27 to 29, wherein the second information further comprises at least one of the following data analysis task information corresponding to the data analysis result:
task identification information;
conditional limitation information of a task; and
analysis object information of a task.

31. The method according to claim 26, wherein the evaluating, by the third network device, first performance information of a first model based on the second information comprises:
collecting, by the third network device, target data based on the second information; and
evaluating, by the third network device, the first performance information of the first model based on the target data.

32. The method according to claim 31, wherein in a case that first indication information in the second information indicates that the first network device has performed a first network operation based on the data analysis result, the target data comprises data unrelated to the first network operation.

33. The method according to claim 32, wherein the collecting, by the third network device, target data based on the second information comprises at least one of the following:
determining, by the third network device based on first time information in the second information, data unrelated to the first time information as the target data;
determining, by the third network device based on first object information in the second information, data unrelated to the first object information as the target data; and
determining, by the third network device based on first location information in the second information, data unrelated to the first location information as the target data.

34. The method according to claim 32, wherein the collecting, by the third network device, target data based on the second information comprises:
obtaining, by the third network device based on data analysis task information corresponding to the second information, full-set data for evaluating the first performance information from a fourth network device; and
removing, by the third network device based on first time information in the second information, data related to the first time information from the full-set data, so as to obtain the target data; and/or removing, by the third network device based on first object information in the second information, data related to the first object information from the full-set data, so as to obtain the target data; and/or removing, by the third network device based on first location information in the second information, data related to the first location information from the full-set data, so as to obtain the target data.

35. The method according to claim 31, wherein, in a case that first indication information in the second information indicates that the first network device has not performed a first network operation based on the data analysis result, the target data comprises full-set data that is used for evaluating the first performance information and that is obtained by the third network device from a fourth network device based on data analysis task information corresponding to the second information.

36. The method according to any one of claims 26 to 35, wherein the receiving, by a third network device, second information from a first network device or a second network device comprises:
receiving, by the third network device, N pieces of second information from the first network device or the second network device, wherein N is an integer greater than 1, the N pieces of second information are determined by the first network device based on N pieces of first information, and the first information comprises the data analysis result.

37. The method according to claim 36, wherein the method further comprises:
receiving, by the third network device, at least one of the following information from the first network device or the second network device:
the number N of pieces of the second information; and
a preset reporting time point or a preset reporting time period.

38. The method according to claim 36, wherein the first information further comprises at least one of the following:
confidence information, wherein the confidence information is used to indicate a credibility degree of the data analysis result by the second network device;
second performance information of the first model; and
an interested-data type, wherein the interested-data type is used for determining the second indication information.

39. A model supervision processing apparatus, comprising:
a first receiving module, configured to receive first information from a second network device, wherein the first information comprises a data analysis result; and
a first sending module, configured to send second information to the second network device or a third network device, wherein the second information is used to indicate a usage status of the data analysis result by the first network device.

40. A model supervision processing apparatus, comprising:
a second sending module, configured to send first information to a first network device, wherein the first information comprises a data analysis result; and
a second receiving module, configured to receive second information from the first network device, wherein the second information is used to indicate a usage status of the data analysis result by the first network device.

41. A model supervision processing apparatus, comprising:
a third receiving module, configured to receive second information from a first network device or a second network device, wherein the second information is used to indicate a status of using a data analysis result by the first network device; and
a second evaluation module, configured to evaluate first performance information of a first model based on the second information, wherein the first model is a model obtained by the third network device through a model training process, and the first model is used for generating the data analysis result by the second network device.

42. A network-side device, comprising a processor and a memory, wherein the memory stores a program or instructions capable of running on the processor, and when the program or instructions are executed by the processor, the steps of the model supervision processing method according to any one of claims 1 to 38 are implemented.

43. A readable storage medium, wherein the readable storage medium stores a program or instructions, and when the program or instructions are executed by a processor, the steps of the model supervision processing method according to any one of claims 1 to 38 are implemented.
